# EUROPÄISCHE PATENTANMELDUNG

(11) **EP 1 238 842 A1**
(43) Veröffentlichungstag der Anmeldung: **11.09.2002**
(21) Anmeldenummer: 02002673.8
(22) Anmeldetag: 06.02.2002
(51) Int. Cl.: B60J 7/12

(54) **Rahmengestell, inbesondere Verdeckgestell für Cabriolets sowie Verfahren zu dessen Herstellung**

(30) Priorität: 02.03.2001 DE 10110061
(71) Anmelder: PARAT Automotive, Schönenbach GmbH + Co. KG, 42897 Remscheid (DE)
(72) Erfinder: Schönenbach, Heinz, 42897 Remscheid (DE)
(74) Vertreter: Patentanwälte Ostriga & Sonnet

(57) **Zusammenfassung**

Bei einem Rahmengestell (1) aus Einzelbauteilen (2,3), deren Verbindungsstellen (12) lose Steckverbindungen sind, die Hohlräume (4) ausbilden, werden, nachdem die Bauteile (2,3) passgenau in einer Zusammenbauvorrichtung (13) positioniert sind, die Hohlräume (4) mittels weicher Dichtungen (8,10) abgedichtet und mit dünnflüssigem PUR-Material gefüllt, das sodann aushärtet und somit den Zusammenhalt der Bauteile (2,3) sicherstellt. In den Hohlräumen (4) der Verbindungsstellen (12) werden Bauteiltoleranzen durch das noch flüssige PUR-Material kompensiert, bevor es ausgehärtet ist. Beim Aushärten entstehen keine relevanten Spannungen. Hohe Maßgenauigkeit des Rahmengestells ist gewährleistet.

## Beschreibung

Die Erfindung bezieht sich auf ein Rahmengestell, insbesondere Verdeckgestell für Cabriolets, nach dem Oberbegriff des Anspruchs 1.

Üblicherweise werden Verdeckgestelle aus diversen Rahmenteilen, vormontierten Gelenken sowie Befestigungselementen zusammengebaut. Diese Elemente werden an ihren jeweiligen Befestigungsstellen in der Regel miteinander verschweißt, vernietet oder verschraubt. Diese Verbindungsarten haben den Nachteil, dass sie starr und punktuell sind, und dadurch hohe Kräfte in ihnen wirken, was eine große Dimensionierung erforderlich macht. Schraubverbindungen müssen an hoch belasteten Stellen wegen der oftmals kurzen Gewinde zusätzlich verstemmt werden, damit sie sich nicht lockern können. Für Schraub- und Nietverbindungen sind oftmals sehr genaue Einzelteiltoleranzen erforderlich, damit die Bohrungen exakt fluchten und somit die Gesamttoleranz des Verdeckgestells in vertretbarem Rahmen bleibt. Schweißverbindungen lassen zwar in den Schweißvorrichtungen einen gewissen Toleranzausgleich der Einzelteile zu, das Schweißen kann jedoch zu Wärmeverzug führen. Solche Verbindungen erfordern außerdem geeignete Materialpaarungen, was zu konstruktiven Einschränkungen führen kann. Grundsätzlich ist es schwierig, Gestelle aus vielen und teilweise langen, dünnen Bauteilen maßhaltig herzustellen.

Der Erfindung liegt die Aufgabe zugrunde, ein Rahmengestell aus unterschiedlichsten Materialpaarungen maßhaltig, verzugsfrei und langlebig zusammenzusetzen zu können.

Die Erfindung löst diese Aufgabe durch die Merkmale des unabhängigen Anspruchs 1 und ist dem entsprechend dadurch gekennzeichnet, dass die Verbindungsstellen der Bauteile als lose Steckverbindungen mit einem ein übliches Passungsspiel überscheitenden Spiel ausgeführt sind, wobei eines der Bauteile in das als Hohlprofil ausgebildete andere Bauteil eingreift, und dass ein den Überdeckungsbereich der Bauteile mindestens teilweise einschließender, abgegrenzter Hohlraum mit einer Kunststoffmasse ausgefüllt ist.

Es können auch weitere Bauteile, die üblicherweise durch Schrauben, Nieten oder Stecken in späteren Arbeitsschritten am Verdeckgesteil befestigt werden, sofort mitbefestigt werden, wodurch eine hohe Positioniergenauigkeit erreicht wird.

Nach einer Weiterbildung ist vorgesehen, dass der abgegrenzte Hohlraum der Verbindungsstelle eine Wand-Öffnung aufweist, durch die ein fließfähiges Material in den Hohlraum einfüllbar ist, um darin auszuhärten. Bevorzugt ist das Material ein Zweikomponenten-Kunststoff, insbesondere auf PUR-Basis.

Das Zwei-Komponenten-PUR-Material härtet nach dem Auffüllen stabilelastisch aus und weist sodann eine Härte von beispielsweise ca. 70 Shore D auf. Ein sinnvoller Bereich praxisnaher Härte dürfte zwischen ca. 50 und 80 Shore D liegen. Das flüssige PUR-Material wird vorzugsweise mit einer Pistole durch die Öffnung in den Hohlraum eingespritzt.

Der Abstand zwischen den Bauteilen und der Wand des Hohlraums ist vorteilhafter Weise so bemessen, dass das Verhältnis zwischen dem kleinsten und dem größten Abstand nicht kleiner ist als etwa 1:5. Praxisnahe Abstände und Toleranzen dürften etwa im Bereich von 3mm ±2mm liegen.

Um ein unkontrolliertes Austreten des zunächst noch dünnflüssigen PUR-Materials zu verhindern, ist es zweckmäßig und vorteilhaft, wenn der Hohlraum innerhalb der Verbindungsstelle mittels Dichtungen abgegrenzt ist, die so beschaffen sind, dass das beim Einbringen flüssige PUR-Material nicht aus dem Hohlraum herauslaufen kann, ehe es ausgehärtet ist. Hier empfehlen sich Dichtungen z.B. aus Silikon wegen der selbsttrennenden OberflächenEigenschaften dieses Materials.

Eine besonders gute und haltbare Verbindung der Bauteile kommt zustande, wenn das ausgehärtete Material mit mindestens einem der Bauteile eine formschlüssige Verbindung eingeht.

Um eine besonders stabile Verbindung zu erhalten, können die Verbindungsstellen bei Bedarf so mit Primer behandelt sein, dass sie mit dem PUR-Material eine Klebeverbindung eingehen. Diesbezüglich sieht die Erfindung vor, dass die Oberfläche mindestens eines der Bauteile im Bereich des Hohlraumes mit einer Oberflächenbehandlung wie einem PUR-Lack-Auftrag versehen ist, mit der das darin befindliche Material eine Klebeverbindung eingeht.

Alternativ können die Bauteile auch geometrisch so ausgebildet sein, dass ein Formschluss entsteht, wodurch im Bedarfsfall das formschlüssige Bauteil eine nicht klebefähige Oberfläche haben kann.

Sodann betrifft die Erfindung ein Verfahren zur Herstellung eines Rahmengestells, insbesondere eines Verdeckgestells für Cabriolets, mit Verbindungsstellen miteinander ausbildenden Bauteilen wie Rahmenteilen, Streben, Gelenkteilen. Dieses Verfahren ist erfindungsgemäß dadurch gekennzeichnet, dass man an der jeweiligen Verbindungsstelle in dem einen Bauteil, welches zur teilweisen Aufnahme des anderen Bauteils hohl ausgebildet ist, einen abgegrenzten sowie bis auf eine Einfüllöffnung abgedichteten Hohlraum schafft und man in diesen Hohlraum durch die Einfüllöffnung ein zunächst fließfähiges bzw. flüssiges Kunststoff-Material einfüllt, welches nach dem Aushärten eine formschlüssige Verbindung zwischen den Bauteilen bewirkt.

Es ist ein wesentlicher Vorteil, dass die Verbindungsstellen selbst nicht genau maßhaltig sein müssen, da die Ungenauigkeiten vom PUR-Material ausgeglichen werden. Im Rahmen der Erfindung ist es wesentlich, dass die Bauteile von der Zusammenbauvorrichtung in lagegerechter sowie funktionsgerechter Position zueinander gehalten werden, so dass die Zusammenbauvorrichtung die Genauigkeit des Gestells vorgibt. Ausgehend von dieser präzisen Vorpositionierung werden die Verbindungsstellen sodann in optimaler Lage und Ausrichtung ihrer Bauteile zueinander ausgeschäumt und fixiert. Es muss also auch kein besonderes Augenmerk auf die Passung der Verbindungsstellen gelegt werden. Nach dem Entnehmen des zusammengebauten Gestells aus der Zusammenbauvorrichtung kommt es nicht zu Verzügen, da keine relevanten Spannungen in den Verbindungsstellen erzeugt worden sind.

Ein weiterer Vorteil besteht darin, dass die Zusammenbauvorrichtungen keinen hohen Kräften durch Schraub- oder Nietwerkzeuge widerstehen müssen. Auch Kräfte durch Schweißverzug müssen nicht aufgenommen werden. Dadurch können die Vorrichtungen einfacher, gut zugänglich und leichter ausfallen.

Ein anderer Vorteil besteht darin, dass die Verbindungsstellen einen guten Kraftfluss zulassen, da das eingesteckte Bauteil vom PUR-Material formschlüssig umfasst wird. Gleichzeitig können durch die Elastizität des PUR-Materials Spannungsspitzen an den Bauteilen vermieden werden.

Eine zusätzlicher Vorteil besteht darin, dass bei der Wahl der Materialpaarung der Baureile an den Verbindungsstellen beziehungsweise bei der Vorbehandlung der Materialien große Freiheiten bestehen, da weder auf Schweißfähigkeit wie bei Schweißverbindungen noch auf Spannungskorrosion Rücksicht genommen werden muss. Bei formschlüssigen Verbindungen kann zusätzlich auf Klebefähigkeit verzichtet werden.

Noch ein Vorteil ist darin zu sehen, dass die Einzelteile in der Regel ihre endgültige Oberflächenbehandlung schon vor dem Zusammenbau erhalten können, da diese durch die erfindungsgemäße Verbindung nicht beschädigt werden. Bei Verwendung von PUR-Lack als Oberflächenbehandlung kann dieser gleichzeitig als Klebegrundlage für das PUR-Material dienen.

Schließlich besteht noch ein Vorteil darin, dass mit der Erfindung eine nennenswerte Geräuschdämpfung erzielt wird, da die Übertragung von Körperschall in den Verbindungsstellen unterbrochen ist.

Ein Ausführungsbeispiel des erfindungsgemäßen Verfahrens ist in der Zeichnung dar gestellt. Es zeigen:
Fig. 1 eine schematische Darstellung eines Verdeckgestells in der Perspektive,
Fig. 2 eine gegenüber Fig. 1 vergrößerte Detail-Darstellung einer Verbindungsstelle,
Fig. 3 einen Schnitt durch die Verbindungsstelle vor der Füllung mit PUR-Material,
Fig. 4 einen Schnitt durch die Verbindungsstelle nach Füllung mit PUR-Material,
Fig. 5 einen Schnitt durch die Verbindungsstelle mit Toleranzen, und
Fig. 6 einen Schnitt durch die Verbindungsstelle im Bereich einer Dichtung.

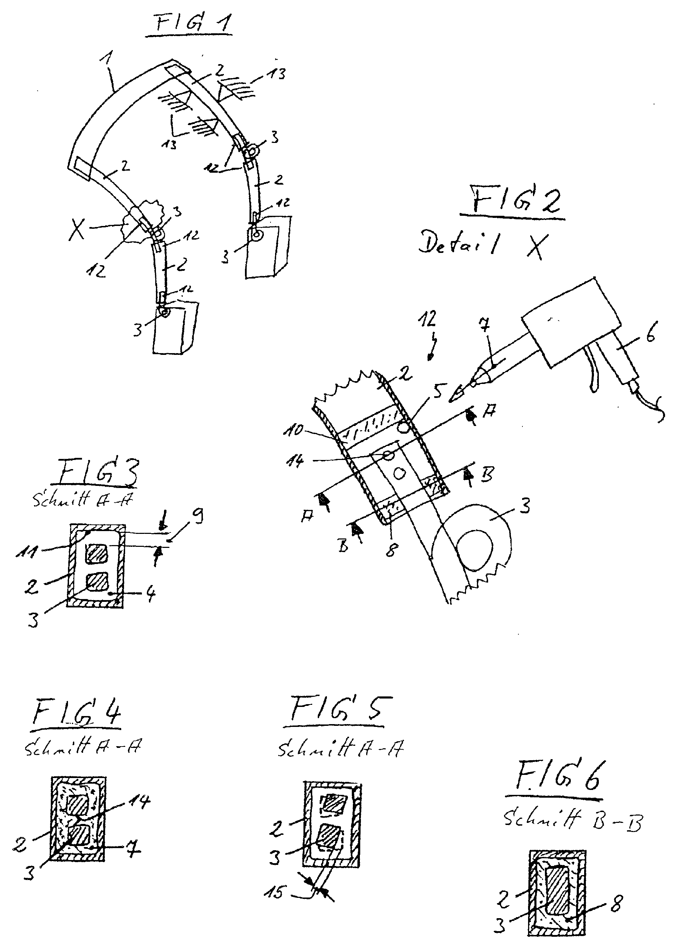

In Fig. 1 ist ein Verdeckgestell 1 für ein Cabriolet schematisch dargestellt. Es besteht aus Rahmenteilen 2 und Gelenkteilen 3. Die Rahmenteile 2 sind als Hohlprofile ausgebildet, und jeweils ein Gelenkteil 3 bzw. ein Anschlussstück oder -zapfen desselben, ist in einen Hohlraum des zugehörigen Rahmenteils 2 lose eingeschoben. Diese Bereiche sind als Verbindungsstellen 12 bezeichnet. Mit 13 eine Halte- oder Zusammenbauvorrichtung bezeichnet, die das Rahmenteil 2 und das Gelenkteil 3 beim Zusammenbau in ihrer Position zueinander fixiert.

Fig. 2 zeigt eine Detailansicht einer Verbindungsstelle 12. Das Gelenkteil 3 ist in das Rahmenteil 2 lose eingeschoben. Der Hohlraum zwischen den beiden Teilen wird durch elastische Dichtungen 8 und 10 abgedichtet, lediglich eine Einfüllöffnung 5 für flüssiges PUR-Material 7 ist vorhanden. Eine Pistole 6 für das PUR-Material 7 ist mit einem Abstand zur Öffnung 5 dargestellt, auf die die Pistole zum Einfüllen des PUR-Materials 7 aufgesetzt wird.

Fig. 3 zeigt einen Schnitt durch die Bauteile 2 und 3 entsprechend der Schnittangabe A-A in Fig. 2 und zeigt den erwähnten Hohlraum, der hier mit der Bezugsziffer 4 versehen ist. Der für das Einfüllen der PUR-Masse 7 erforderliche Abstand ist mit 9 bezeichnet. Bezugsziffer 11 weist auf die mit PUR-Lack lackierte innere Oberfläche des Bauteils 2 hin.

Fig. 4 zeigt ebenfalls einen Schnitt durch die Bauteile 2 und 3 entsprechend der Schnittangabe A-A in Fig. 2 sowie die PUR-Masse 7 in ihrem in den Hohlraum eingefüllten und ihn formschlüssig auskleidenden sowie die Öffnung 14 des Bauteils 3 durchdringende Zustand.

Fig. 5 zeigt, wiederum in einem Schnitt entsprechend der Schnittangabe A-A in Fig. 2, wie mit der Bezugsziffer 15 angedeutete Lagetoleranzen des Bauteils 3 relativ zum Bauteil 2 im Vergleich zu Fig. 3 aussehen können.

Fig. 6 zeigt einen Schnitt durch die Bauteile 2 und 3 entsprechend der Schnittangabe B-B in Fig. 2 und die zwischen den Bauteilen 2 und 3 liegende Dichtung 8.

Zusammenfassen lässt sich festhalten, dass bei einem Rahmengestell aus Einzelbauteilen, deren Verbindungsstellen lose Steckverbindungen sind, die Hohlräume ausbilden, diese Hohlräume, nachdem die Bauteile in einer Zusammenbauvorrichtung passgenau positioniert sind, mittels Dichtungen abgedichtet und mit dünnflüssigem PUR-Material gefüllt werden, das sodann aushärtet und somit den Zusammenhalt der Bauteile sicherstellt. In den Hohlräumen der Verbindungsstellen werden Bauteiltoleranzen durch das noch flüssige PUR-Material kompensiert, bevor es ausgehärtet ist. Beim Aushärten entstehen keine relevanten Spannungen. Hohe Maßgenauigkeit des Rahmengestells ist gewährleistet.

## Patentansprüche

1. Rahmengestell, insbesondere Verdeckgestell für Cabriolets, mit Bauteilen wie Rahmenteilen, Streben, Gelenkteilen od.dgl., die Verbindungsstellen miteinander ausbilden, **dadurch gekennzeichnet, dass** die Verbindungsstellen (12) der Bauteile (2, 3) als lose Steckverbindungen mit einem ein übliches Passungsspiel überscheitenden Spiel ausgeführt sind, wobei eines der Bauteile (3) in das als Hohlprofil ausgebildete andere Bauteil (2) eingreift, und dass ein den Überdeckungsbereich der Bauteile (2, 3) mindestens teilweise einschließender, abgegrenzter Hohlraum (4) mit einer Kunststoffmasse ausgefüllt ist.

2. Rahmengestell nach Anspruch 1, **dadurch gekennzeichnet, dass** der abgegrenzte Hohlraum (4) der Verbindungsstelle (12) eine Wand-Öffnung (5) aufweist, durch die ein fließfähiges Material (7) in den Hohlraum (4) einfüllbar ist, um darin auszuhärten.

3. Rahmengestell nach Anspruch 2, **dadurch gekennzeichnet, dass** das Material (7) ein Zweikomponenten- Kunststoff, insbesondere auf PUR-Basis, ist.

4. Rahmengestell nach Anspruch 1 oder 2, **dadurch gekennzeichnet, dass** der Abstand (9) zwischen den Bauteilen (2, 3) und der Wand des Hohlraums (4) so bemessen ist, dass das Verhältnis zwischen dem kleinsten und dem größten Abstand nicht kleiner ist als etwa 1:5.

5. Rahmengestell nach einem der Ansprüche 1 oder 2, **dadurch gekennzeichnet, dass** der Hohlraum (4) innerhalb der Verbindungsstelle (12) mittels Dichtungen (8, 10) abgegrenzt ist, die so beschaffen sind, dass das beim Einbringen flüssige PUR-Material (7) nicht aus dem Hohlraum (4) herauslaufen kann, ehe es ausgehärtet ist.

6. Rahmengestell nach einem der vorhergehenden Ansprüche, **dadurch gekennzeichnet, dass** das ausgehärtete Material (7) mit mindestens einem der Bauteile (2; 3) eine formschlüssige Verbindung eingeht.

7. Rahmengestell nach einem der vorhergehenden Ansprüche, **dadurch gekennzeichnet, dass** die Oberfläche (11) mindestens eines der Bauteile (2; 3) im Bereich des Hohlraumes (4) mit einer Oberflächenbehandlung wie einem PUR-Lack-Auftrag versehen ist, mit der das darin befindliche Material (7) eine Klebeverbindung eingeht.

8. Verfahren zur Herstellung eines Rahmengestells, insbesondere eines Verdeckgestells für Cabriolets, mit Verbindungsstellen miteinander ausbildenden Bauteilen wie Rahmenteilen, Streben, Gelenkteilen od.dgl., **dadurch gekennzeichnet, dass** man an der jeweiligen Verbindungsstelle in dem einen Bauteil (2), welches zur teilweisen Aufnahme des anderen Bauteils (3) hohl ausgebildet ist, einen abgegrenzten sowie bis auf eine kleine Einfüllöffnung (5) abgedichteten Hohlraum (4) schafft und man in diesen Hohlraum (4) durch die Einfüllöffnung (5) ein zunächst fließfähiges bzw. flüssiges Kunststoff-Material einfüllt, welches nach dem Aushärten eine formschlüssige Verbindung zwischen den Bauteilen (2, 3) bewirkt.

9. Verfahren nach Anspruch 8, **dadurch gekennzeichnet, dass** man nach dem Zusammenstecken der Bauteile (2, 3) diese bis zum Aushärten des Materials (7) in ihrer Position zueinander fixiert.

10. Verfahren nach Anspruch 8, **dadurch gekennzeichnet, dass** man im Verbindungsbereich der Bauteile (2, 3) die Oberfläche (11) mindestens eines der Bauteile (2; 3) mit einer Beschichtung versieht, die mit dem Material (7) eine Klebeverbindung eingeht.
